# FASCICULE DE BREVET EUROPEEN

(11) **EP 3 353 488 B1**
(45) Date de publication et mention de la délivrance du brevet: **10.07.2019**
(21) Numéro de dépôt: 16785190.6
(22) Date de dépôt: 15.09.2016
(51) Int. Cl.: G01B 11/25, B07C 5/00, B07C 1/10, B07C 1/04, G01B 11/00

(54) **PROCEDE POUR MESURER UN PROFIL 3D D'UN OBJET**
VERFAHREN ZUR MESSUNG DES 3D-PROFILS EINES OBJEKTS
METHOD FOR MEASURING THE 3D PROFILE OF AN OBJET

(30) Priorité: 22.09.2015 FR 1558928
(43) Date de publication de la demande: 01.08.2018
(73) Titulaire: Solystic, 92220 Bagneux (FR)
(72) Inventeur: LACAZE, Vincent, 92350 Le Plessis-Robinson (FR); JACOB, Rajna, 11320 Montferrand (FR); EL BERNOUSSI, Hicham, 75015 Paris (FR)
(74) Mandataire: Prugneau, Philippe
(86) Numéro de dépôt international: PCT/FR2016/052340
(87) Numéro de publication internationale: WO 2017/051096

(56) Documents cités:
- DE-A1- 19 721 688
- FR-A1- 2 929 481
- US-A- 4 837 732
- US-A1- 2005 231 734

## Description

### Domaine technique

Le domaine de l'invention est celui de la mesure de profil 3D d'objets. Plus particulièrement l'invention concerne un procédé pour mesurer un profil 3D d'un objet en déplacement sur un convoyeur selon une certaine direction de convoyage comprenant une étape consistant à scanner par triangulation avec un capteur optique une ligne laser projetée sur l'objet en déplacement sur le convoyeur.

### Technique antérieure

La mesure de profil 3D d'objets est couramment utilisée dans le domaine du tri postal afin d'obtenir des informations sur la dimension, la hauteur et l'orientation de colis convoyés à plat sur un convoyeur.

C'est la raison pour laquelle certaines machines de tri postal sont équipées à la fois d'un capteur installé le long du convoyeur capable de réaliser des scans des objets en déplacement et d'une unité de traitement de données apte à récupérer les scans du capteur pour reconstituer un profil 3D de l'objet en déplacement. De nos jours, plusieurs techniques sont couramment utilisées dans le tri postal, chacune ayant des particularités propres.

La stéréoscopie par exemple, permet de reconstituer le relief d'un objet sur un convoyeur à partir de deux images, représentant l'objet à plat sur le convoyeur, réalisées selon deux angles distincts de prise de vue. Une analyse de la différence de position des points caractéristiques entre les deux images permet de calculer une position en profondeur de chacun de ces points par rapport à un point fixe et ainsi de déterminer le profil 3D de l'objet.

Cette technique présente cependant le risque que l'objet à mesurer comporte peu de points caractéristiques et notamment lors de la présence de zones homogènes entre l'objet et le convoyeur conduisant à une mauvaise mise en correspondance des points sur les deux images et donc à une mesure erronée.

La triangulation laser est également largement utilisée puisqu'elle permet d'atteindre une très bonne précision sur la mesure de hauteur avec des distances de mesure allant jusqu'à plusieurs mètres permettant de couvrir le spectre requis pour le tri postal. La triangulation laser fonctionne avec une caméra qui mesure la déformation d'une ligne laser projetée avec un angle connu sur la surface à mesurer. Le document de brevet français FR-2929481 divulgue un procédé d'examen visiométrique de produits de boulangerie qui utilise la triangulation laser. US 4 837 732 A décrit la mesure d'un profil 3d du profil d'une dent. US 2005/0231734 A1 et US 2002/0030808 A1 décrivent la mesure d'un profil 3d du profil d'un objet en déplacement. DE197 21 688 A1 décrit la mesure d'un profil 3d d'un objet.

Cependant, la mesure est limitée dans le sens de convoyage de l'objet créant des zones d'angle mort préjudiciables dans le cas d'objets de formes complexes ou de plusieurs objets en superposition.

D'autres techniques sont également utilisées dans des domaines autres que le tri postal telle que la technique dite du temps de vol (Time Of Flight : TOF) qui consiste à illuminer le convoyeur et les objets par un éclair de lumière et à calculer le temps de trajet de cet éclair entre l'objet et le capteur optique. Le temps de vol de cet éclair est ici directement proportionnel à la distance entre le capteur optique et l'objet mesuré. Cette mesure de temps de vol est effectuée indépendamment par chaque pixel du capteur optique, permettant ainsi d'obtenir une image complète en 3D de l'objet mesuré.

Cependant, les longs temps d'intégration des caméras TOF ne sont pas adaptés pour permettre l'acquisition totale de l'objet en déplacement sur un convoyeur. De plus cette technologie ne propose pas une résolution suffisante pour la précision de mesure souhaitée pour le tri postal.

Or, dans le tri postal il est très fréquent que des colis soient convoyés en vrac (en superposition, en juxtaposition, incliné sur la tranche, etc.). Aucunes des techniques présentées ci-avant ne permet de mesurer correctement le profil 3D de ces colis en déplacement.

### Exposé de l'invention

Le but de l'invention est ici de remédier aux inconvénients indiqués ci-dessus.

L'invention a donc pour objet un procédé pour mesurer un profil 3D d'un objet en déplacement sur un convoyeur selon une certaine direction de convoyage selon la définition de la revendication 1.

Le procédé selon l'invention peut en outre avantageusement présenter les particularités suivantes :
- les étapes consistant à scanner l'objet par triangulation laser et par différence de contraste sont réalisées de manière alternée ;
- les étapes consistant à scanner l'objet par triangulation laser et par différence de contraste sont réalisées de manière simultanée ;
- une étape consiste à scanner par triangulation avec ledit capteur optique une autre ligne laser projetée sur l'objet en déplacement ;
- la lumière blanche est produite par des LEDs ;
- la lumière blanche est à polarisation croisée.

L'idée à la base de l'invention est donc de réaliser la mesure 3D d'un objet lorsqu'il est en mouvement, et plus particulièrement lorsqu'il se présente en superposition ou juxtaposition par rapport à un autre objet, en utilisant la complémentarité de deux scans de l'objet obtenus via une double acquisition par triangulation laser et par différence de contraste. Cette amélioration permet de mesurer un profil 3D en haute résolution de l'objet sans augmenter la fréquence d'acquisition des images. Ce type de procédé permet en outre de mesurer des profils 3D d'objets de formes complexes.

L'idée de l'invention consiste également à n'utiliser qu'un seul capteur optique afin de simplifier de manière générale le fonctionnement du procédé sans apport de nouveau matériel. On comprendra ainsi que les scans laser et par différence de contraste sont effectués dans le champ optique d'un même capteur permettant de simplifier leur exploitation conjointe pour la mesure du profil 3D.

Le procédé selon l'invention peut en outre être avantageusement mis en oeuvre dans un dispositif de tri d'objets convoyés sur un convoyeur selon une certaine direction de convoyage et plus particulièrement dans le domaine du tri postal. Le profil 3D des objets postaux convoyés est également considéré comme une information de tri et est utilisé en complémentarité avec les autres informations de tri (adresse, etc.) pour déterminer la sortie de tri correspondante.

Le procédé est aussi en particulier bien adapté pour détecter des situations (chargement multiple) où des objets se chevauchent sur le convoyeur d'un équipement de tri postal.

### Présentation sommaire des dessins

La présente invention sera mieux comprise et d'autres avantages apparaîtront à la lecture de la description qui suit et des dessins annexés :
La figure 1 est une représentation schématique d'une portion d'un convoyeur d'objets vu de profil apte à mettre oeuvre le procédé de mesure d'un profil 3D d'un objet selon l'invention ;
La figure 2 est une représentation schématique de ladite portion de convoyeur vu de dessus ;
La figure 3 est une représentation schématique de la fusion des scans laser et par différence de contraste par une unité de traitement de données pour obtenir une mesure en 3D des objets en superposition selon un mode de réalisation de l'invention
La figure 4 est une représentation très schématique d'un dispositif de tri d'objets postaux apte à mettre en oeuvre le procédé de mesure de profil 3D selon l'invention.

### Description d'un mode de réalisation

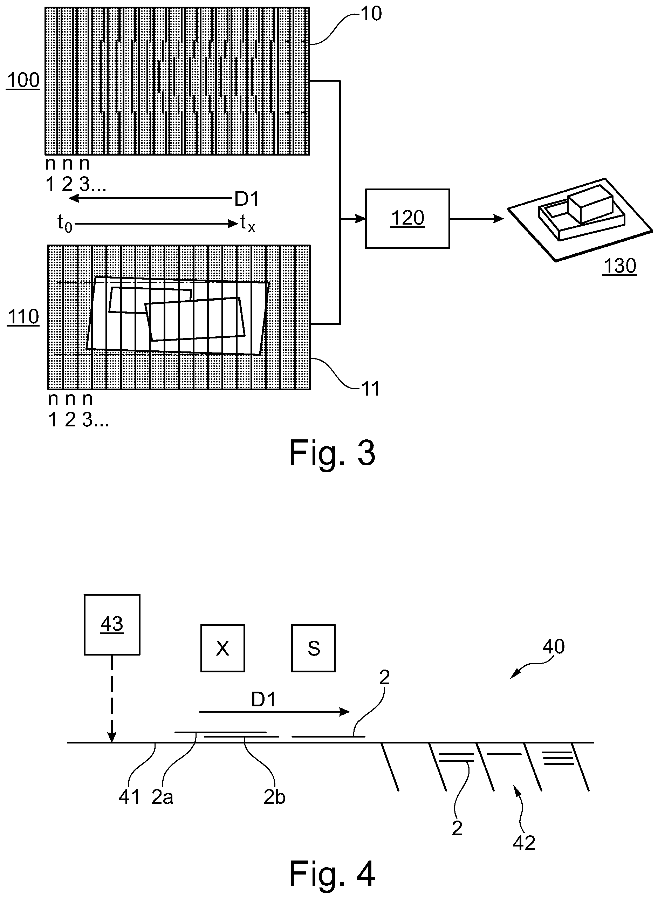

Le procédé pour mesurer un profil 3D selon l'invention est ici mis en oeuvre par exemple dans un dispositif de tri d'objets postaux 40, comprenant un convoyeur de tri 41 pour convoyer des objets postaux en série tels que 2, 2a, 2b selon une certaine direction de convoyage D1 le long de sorties de tri 42 sous la commande d'une unité de contrôle/commande 43, comme représenté sur la figure 4. Dans l'exemple illustré sur la figure 4, on a deux objets superposés 2a, 2b qui doivent être identifiés par mesure de profil en 3D (bloc X) et être séparés l'un de l'autre (bloc S) pour être triés séparément dans les sorties de tri 42.

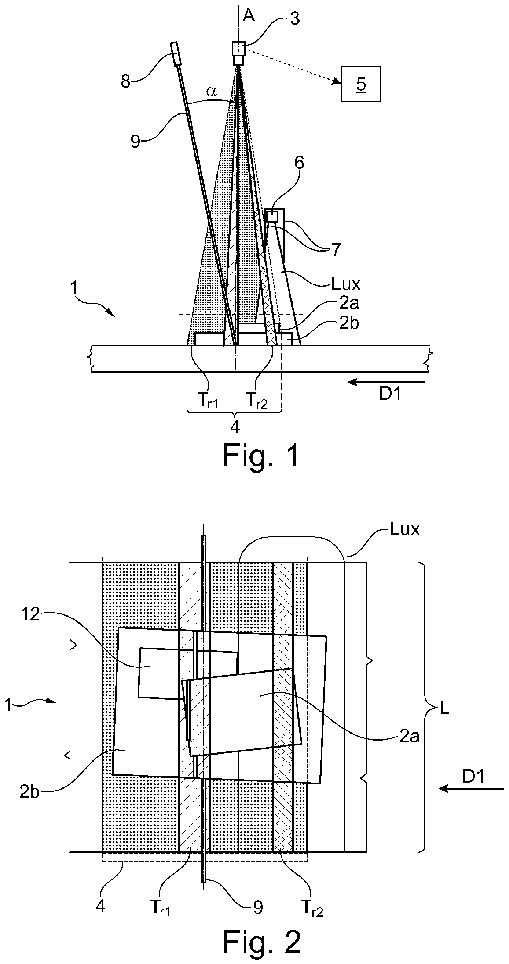

Sur la figure 1, on a illustré un convoyeur 1 avec un capteur optique matriciel 3 apte à scanner une portion 4 du convoyeur 1, correspondant au champ optique du capteur 3 et qui s'étend sur toute la largeur L du convoyeur 1. L'axe optique A du capteur 3 est ici préférentiellement perpendiculaire au convoyeur 1 de manière à faciliter l'observation en plan des objets postaux 2, 2a, 2b en déplacement, typiquement à une hauteur de un mètre. Le capteur optique matriciel 3 est ici apte à former une image numérique sur plusieurs lignes de pixels, typiquement une centaine de lignes de pixels, cette image numérique pouvant comprendre en même temps une ligne laser projetée sur l'objet en déplacement et une bande en différence de contraste parallèle à la ligne laser et transversale à la direction de D1.

Le capteur optique 3 permet d'offrir des images numériques d'une résolution suffisante pour des mesures dimensionnelles avec une précision de l'ordre du millimètre sur la largeur et la hauteur des objets.

Les scans du capteur optique 3 sont entre autre utilisés pour mettre en évidence des différences de contrastes en niveau de gris dans la portion de convoyeur 4. De manière connue, plusieurs scans consécutifs permettent de définir, après leur concaténation par une unité de traitement de données 5 du convoyeur 1, l'intégralité des contours des objets 2a, 2b en déplacement dans la portion 4 de convoyeur. La différence de contraste permet en outre de déterminer la présence et le positionnement d'étiquettes 12 et/ou de plis sur les objets 2a 2b.Afin d'augmenter et d'homogénéiser le contraste sur la portion 4 de convoyeur 1, un éclairage artificiel de type LEDs 6, ici de couleur blanche, est également monté entre le capteur optique 3 et la bande du convoyeur 1. Les LEDs 6 sont placées contre un abat jour 7 permettant de limiter la propagation de la lumière LUX sur une bande restreinte de la portion 4 de convoyeur 1 s'étendant sur la largeur du convoyeur 1.

Sans restreindre la portée de l'invention, l'éclairage artificiel 6 peut également fonctionner en polarisation croisée afin de réduire les réflexions sur les objets 2a, 2b par exemple lorsqu'ils sont emballés dans un film plastique.

Le convoyeur 1 comprend également une première source laser 8, apte à projeter une ligne laser 9 sur ladite portion 4 de convoyeur. La ligne laser 9 est ici inclinée selon un angle α (compris entre 10° et 30° de préférence 20°) par rapport à l'axe A du capteur optique 3 et est dirigée transversalement à la direction de convoyage D1 pour s'étendre sur toute la largeur du convoyeur 1. On comprendra donc que la ligne laser 9 est déformée par les objets 2a, 2b lors de son passage dans la portion 4 de convoyeur. La figure 2 représente à la fois la ligne laser 9 en pointillée on considérant l'absence des objets 2a, 2b dans la portion 4 de convoyeur, et en trait plein décalé pour la ligne laser déformée par les objets 2a et 2b.

De manière connue, le profil de la ligne laser 9 déformé par les objets 2a, 2b et capté lors des scans successifs permet de déterminer, à l'aide de l'unité de traitement de données 5, les hauteurs des objets 2a, 2b selon le principe connu de la triangulation laser, ou scanner laser.

Sans restreindre la portée de l'invention, le convoyeur 1 comprend une seconde source laser, non représentée, apte à projeter une autre ligne laser dans la portion 4 de convoyeur angulairement distincte de la ligne laser 9. On comprendra que cette autre ligne laser, projetée ici en vis-à-vis de la ligne laser 9, permet de consolider l'acquisition par triangulation laser en limitant les angles morts dans le cas d'objets 2a, 2b de formes complexes ou lorsque plusieurs objets 2 sont en superposition, comme montré sur la figure 1. Dans ce cas, la bande en contraste Tr2 peut être intercalée entre les deux lignes laser projetées sur l'objet en déplacement sur le convoyeur 1. La largeur de la bande en contraste et l'écartement entre les lignes laser projetées dans la portion 4 est liée à la vitesse de déplacement du convoyeur 1, cette vitesse de déplacement fixe étant un paramètre prédéterminé pour la mise en coïncidence temporelle dans l'unité 5 des scans par triangulation et des scans par différence de contraste de façon à les fusionner pour mesurer le profil 3D de l'objet. Typiquement, avec un capteur de 100 lignes de pixels, on peut avoir 20 lignes de pixels réservées au scan de la bande en contraste et les autres lignes de pixels réservées au scan par triangulation des deux lignes laser en ayant une séparation d'une centaine de millimètres entre la bande de contraste et la ligne laser dans la portion 4.

L'unité de traitement 5 est également conçue pour fusionner les données complètes des scans laser et par différence de contraste.

Pour ce faire, l'unité 5 découpe le scan comprenant le profil des hauteurs 10 et le scan comprenant le profil des contours 11 chacun en plusieurs colonnes de pixels de taille identique selon la direction de convoyage D1, comme visible sur la figure 3.

A chaque colonne est attribué un numéro d'ordonnancement (n1, n2, etc.) correspondant à un scan dans la portion de convoyeur à un temps T (t0 à tx) au fur et à mesure du déplacement des objets. Une mise en coïncidence ou fusion est réalisée sur les colonnes ayant un numéro d'ordonnancement identique par l'unité de traitement 5. Une fois toutes les colonnes fusionnées la mesure du profil 3D de l'objet est déterminée par l'unité de traitement de données 5.

Afin d'éviter que la ou les lignes laser ne perturbent le scan par différence de contraste et vice-versa, le capteur optique 3 est ici conçu pour scanner les objets 2a, 2b de façon alternée à l'aide d'une roue codeuse, non représentée. La roue codeuse permet ici de scanner la portion 4 par tronçon (Tr1 et Tr2) et à un pas constant. A chaque tronçon correspond donc une colonne de pixels d'un scan. On comprendra également que la fréquence des scans est définie entre autre par la vitesse de déplacement du convoyeur 1. Au vu de la distance négligeable entre les deux zones d'acquisition, ici de l'ordre de quelques centimètres, les scans laser et par différence de contraste sont considérés être réalisés en même temps.

Dans un autre mode de réalisation de l'invention, on pourra effectuer simultanément les scans laser et par contraste de sorte que chaque image numérique 4 réalisée par le capteur optique 3 comprend à la fois le profil de la ligne laser 9 et la différence de contraste. Dans ce cas, l'unité de traitement de données 11 est conçue pour détecter les perturbations engendrées par la ligne laser 9 et pour modifier en conséquence la mesure du profil de l'objet 2 par différence de contraste. On comprendra en outre que l'abat jour 7 permet ici de limiter l'éclairage LUX sur une zone restreinte dans la portion 4 de convoyeur 1. Ainsi, les scans laser et par différence de contraste peuvent être effectués simultanément sans pour autant entraîner de grosses perturbations sur la mesure du profil 3D de l'objet 2 par différence de contraste.

Dans le cas d'un convoyage de deux objets 2a, 2b superposés ou juxtaposées sur un convoyeur, comme représenté en figures 1 et 2, le procédé consiste dans un premier temps à scanner par triangulation laser 100 les objets 2a, 2b afin d'obtenir un profil des hauteurs, figure 3. Dans un second temps, le procédé consiste à scanner par différence de contraste 110 les objets 2a, 2b afin d'obtenir les contours desdits objets. Puis, le procédé consiste à fusionner 120 à l'aide de l'unité de traitement de données 5 les scans laser et par différence de contraste afin d'obtenir la mesure 130 du profil 3D des objets 2a, 2b.

Sur la figure 4, l'équipement représenté par le bloc X est spécialement conçu pour mettre en oeuvre le procédé selon l'invention afin de mesurer le profil 3D d'objets postaux comme 2a, 2b qui sont ici en superposition, détecter cette superposition (chargement multiple d'objets sur le convoyeur 41) de façon qu'un équipement représenté par le bloc S qui est en aval de l'équipement X agissent sur les objets 2a,2b en superposition pour les séparer et les individualiser sur le convoyeur 41 de sorte à rendre possible le tri des objets 2a,2b dans les sorties de tri 42..

Il va de soi que la présente invention ne saurait être limitée à la description qui précède d'un de ses modes de réalisation, susceptibles de subir quelques modifications sans pour autant sortir du cadre de l'invention.

## Revendications

1. Procédé pour mesurer un profil 3D d'un objet (2, 2a, 2b) en déplacement sur un convoyeur (1) selon une certaine direction de convoyage (D1) comprenant une étape consistant à scanner par triangulation avec un capteur optique (3) une ligne laser (9) projetée sur ledit objet (2, 2a, 2b) dans le champ optique dudit capteur transversalement à ladite direction (D1), une étape consistant à scanner par différence de contraste en niveau de gris le dessus dudit objet en déplacement sur ledit convoyeur (1), et une étape consistant à exploiter conjointement les résultats des scans par triangulation et par différence de contraste dans une unité de traitement de données (5) pour mesurer le profil 3D dudit objet (2, 2a, 2b), **caractérisé en ce qu'**il comprend une étape consistant à éclairer ledit objet (2, 2a, 2b) par une bande de lumière blanche parallèlement à la ligne laser lors de la réalisation des scans dudit objet (2, 2a, 2b) par différence de contraste, ledit capteur optique (3) étant agencé pour scanner dans son champ optique à la fois ladite bande en différence de contraste qui est transversale à ladite direction de convoyage (D1) et ladite ligne laser (9), et **en ce que** ladite unité de traitement de données (5) est agencée pour mettre en coïncidence temporelle les scans par triangulation et les scans par différence de contraste en fonction de la vitesse de déplacement du convoyeur de façon à les fusionner pour mesurer ledit profil 3D.

2. Procédé selon la revendication 1, **caractérisé en ce que** les étapes consistant à scanner l'objet (2, 2a, 2b) par triangulation laser et par différence de contraste sont réalisées de manière alternée.

3. Procédé selon la revendication 1, **caractérisé en ce que** les étapes consistant à scanner l'objet (2, 2a, 2b) par triangulation laser et par différence de contraste sont réalisées de manière simultanée.

4. Procédé selon l'une des revendications 1 à 3, **caractérisé en ce qu'**il comprend en outre une étape consistant à scanner par triangulation avec ledit capteur optique (3) une autre ligne laser projetée sur ledit objet (2, 2a, 2b) en déplacement.

5. Procédé selon la revendication 1, **caractérisé en ce que** ladite lumière blanche est produite par des LEDs.

6. Procédé selon la revendication 1, **caractérisé en ce que** la lumière blanche est à polarisation croisée.

## Patentansprüche

1. Verfahren zum Messen eines 3D-Profils eines sich auf einem Förderer (1) entlang einer bestimmten Förderrichtung (D1) bewegenden Objekts (2, 2a, 2b), umfassend einen Schritt, der darin besteht, durch Triangulation mit einem optischen Sensor (3) eine Laserlinie (9) zu scannen, die im Sichtfeld des Sensors quer zu der Richtung (D1) auf das Objekt (2, 2a, 2b) projiziert wird, einen Schritt, der darin besteht, durch Kontrastdifferenz in Graustufen die Oberseite des sich auf dem Förderer (1) bewegenden Objekts zu scannen, und einen Schritt, der darin besteht, die Ergebnisse der Scans durch Triangulation und durch Kontrastdifferenz gemeinsam in einer Datenverarbeitungseinheit (5) auszuwerten, um das 3D-Profil des Objekts (2, 2a, 2b) zu messen, **dadurch gekennzeichnet, dass** es einen Schritt umfasst, der darin besteht, das Objekt (2, 2a, 2b) beim Ausführen der Scans des Objekts (2, 2a, 2b) durch Kontrastdifferenz mit einem Weißlichtstreifen parallel zur Laserlinie zu beleuchten, wobei der optische Sensor (3) dazu eingerichtet ist, in seinem Sichtfeld sowohl den Kontrastdifferenzstreifen, der quer zur Förderrichtung (D1) verläuft, als auch die Laserlinie (9) zu scannen, und dass die Datenverarbeitungseinheit (5) dazu eingerichtet ist, die Scans durch Triangulation und die Scans durch Kontrastdifferenz in Abhängigkeit von der Bewegungsgeschwindigkeit des Förderers so in zeitliche Übereinstimmung zu bringen, dass sie fusionieren, um das 3D-Profil zu messen.

2. Verfahren nach Anspruch 1, **dadurch gekennzeichnet, dass** die Schritte, die darin bestehen, das Objekt (2, 2a, 2b) durch Lasertriangulation und durch Kontrastdifferenz zu scannen, abwechselnd ausgeführt werden.

3. Verfahren nach Anspruch 1, **dadurch gekennzeichnet, dass** die Schritte, die darin bestehen, das Objekt (2, 2a, 2b) durch Lasertriangulation und durch Kontrastdifferenz zu scannen, gleichzeitig ausgeführt werden.

4. Verfahren nach einem der Ansprüche 1 bis 3, **dadurch gekennzeichnet, dass** es ferner einen Schritt umfasst, der darin besteht, mit dem optischen Sensor (3) durch Triangulation eine weitere Laserlinie zu scannen, die auf das sich bewegende Objekt (2, 2a, 2b) projiziert wird.

5. Verfahren nach Anspruch 1, **dadurch gekennzeichnet, dass** das weiße Licht von LEDs erzeugt wird.

6. Verfahren nach Anspruch 1, **dadurch gekennzeichnet, dass** das weiße Licht kreuzpolarisiert ist.

## Claims

1. A method of measuring a 3D profile of an article (2, 2a, 2b) moving on a conveyor (1) in a certain conveying direction (D1), which method includes a step consisting in using an optical sensor (3) to scan, by triangulation, a laser line (9) projected onto said article (2, 2a, 2b) in the field of view of said sensor transversely to said direction (D1), a step consisting in scanning by contrast difference in grayscale the top of said article moving on said conveyor (1), and a step consisting in making combined use of the results of the scans by triangulation and by contrast difference in a data processor unit (5) for the purpose of measuring the 3D profile of said article (2, 2a, 2b), said method being **characterized in that** it comprises a step consisting in illuminating said article (2, 2a, 2b) by a strip of white light parallel to the laser line when making the scans of said object (2, 2a, 2b) by contrast difference, said optical sensor (3) being arranged to scan, in its field of view, at the same time said strip in contrast difference that is transverse to said conveying direction (D1) and said laser line (9), and **in that** said data processor unit (5) is arranged to match, in time, the scans by triangulation and the scans by contrast difference according to the speed of movement of the conveyor in such a manner as to merge them for measuring said 3D profile.

2. A method according to claim 1, **characterized in that** the steps consisting in scanning the article (2, 2a, 2b) by laser triangulation and by contrast difference are performed in alternation.

3. A method according to claim 1, **characterized in that** the steps consisting in scanning the article (2, 2a, 2b) by laser triangulation and by contrast difference are performed simultaneously.

4. A method according to any one of claims 1 to 3, **characterized in that** it further includes a step consisting in using said optical sensor (3) to scan by triangulation another laser line projected onto said article (2, 2a, 2b) that is moving.

5. A method according to claim 1, **characterized in that** said white light is produced by LEDs.

6. A method according to claim 1, **characterized in that** said white light is cross-polarized.
